(19) Europäisches Patentamt
European Patent Office
Office européen des brevets

(11) **EP 3 766 169 B1**

(12) **FASCICULE DE BREVET EUROPEEN**

(45) Date de publication et mention
de la délivrance du brevet:
**24.04.2024 Bulletin 2024/17**

(21) Numéro de dépôt: **19742815.4**

(22) Date de dépôt: **15.03.2019**

(51) Classification Internationale des Brevets (IPC):
**H02M 7/5387** (2007.01)     **H02P 27/08** (2006.01)

(52) Classification Coopérative des Brevets (CPC):
**H02M 7/5387; H02P 27/08;** H02M 1/0048;
H02M 5/42; Y02B 70/10

(86) Numéro de dépôt international:
**PCT/FR2019/050579**

(87) Numéro de publication internationale:
**WO 2019/186020 (03.10.2019 Gazette 2019/40)**

(54) **PROCÉDÉ DE COMMANDE D'UN ONDULEUR**

VERFAHREN ZUR STEUERUNG EINES UMRICHTERS

METHOD FOR CONTROLLING AN INVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.03.2018 FR 1852290**

(43) Date de publication de la demande:
**20.01.2021 Bulletin 2021/03**

(73) Titulaire: **Safran Electrical & Power
31702 Blagnac Cedex (FR)**

(72) Inventeurs:
• **BOURSE, Wenceslas
31700 BLAGNAC (FR)**
• **TOUTAIN, Pascal Jacques Frédéric Guy
31700 BLAGNAC (FR)**
• **BALTARO, David
31700 BLAGNAC (FR)**

(74) Mandataire: **Regimbeau
20, rue de Chazelles
75847 Paris Cedex 17 (FR)**

(56) Documents cités:
**EP-A1- 2 605 400       EP-A1- 3 493 393
US-A1- 2010 127 652**

• **STM: "PWM MANAGEMENT FOR 3 PHASE BLDC
MOTOR DRIVES USING THE ST7MC", INTERNET
CITATION, 31 December 2007 (2007-12-31), pages
1-39, XP002790677, Retrieved from the Internet:
URL:https://www.st.com/content/ccc/resourc
e/technical/document/application_note/5d/0
4/eb/5e/87/77/48/cb/CD00041736.pdf/files/C
D00041736.pdf/jcr:content/translations/en.
CD00041736.pdf [retrieved on 2019-04-16]**

**Description**

**Domaine de l'invention**

L'invention concerne un procédé de commande d'un onduleur comprenant une pluralité de commutateurs propres à être commandés en état passant/bloquant pour la régulation de l'alimentation électrique d'un moteur.

Ce procédé est en particulier destiné à être mis en oeuvre pour piloter l'alimentation électrique d'un moteur d'un équipement embarqué dans un aéronef, comme par exemple un ventilateur, un compresseur ou une pompe.

L'invention concerne également un contrôleur d'un onduleur configuré pour mettre en oeuvre un tel procédé et un système d'alimentation électrique d'un moteur, qui comprend un tel contrôleur et un tel onduleur.

**Présentation de l'Art Antérieur**

Les aéronefs, et en particulier les avions commerciaux, comprennent un grand nombre d'équipements électriques destinés à l'assistance au pilotage et au confort des passagers. Ces équipements incluent notamment des ventilateurs destinés à des systèmes de refroidissement et de ventilation avioniques, des compresseurs ou des pompes. Les aéronefs comprennent un réseau électrique pour l'alimentation en tension de ces différents équipements. La tension électrique est fournie au réseau au moyen de générateurs de tension installés dans les moteurs (à propulsion ou à réaction) de l'aéronef. La tension électrique transportée par le réseau est généralement une tension alternative, des redresseurs permettant de convertir cette tension alternative en une tension continue afin d'alimenter les équipements nécessitant une telle tension d'alimentation continue.

Les équipements électriques destinés à l'assistance au pilotage et au confort des passagers, comme par exemple les ventilateurs, comprennent ainsi le plus souvent un redresseur en entrée pour obtenir une tension d'entrée continue, le redresseur étant suivi d'un onduleur commandé par un module de commande pour réguler l'alimentation en tension alternative du moteur de l'équipement, de façon à pouvoir piloter par exemple la vitesse de rotation des pales du ventilateur.

Un tel onduleur comporte une pluralité de commutateurs, dont chaque commutateur est adapté, par exemple, pour être en état passant lorsqu'un signal de commande qui lui est appliqué prend la valeur logique « 1 », et pour être en état bloquant lorsqu'un signal de commande qui lui est appliqué prend la valeur logique « 0 ».

Les états (passant ou bloquant) de l'ensemble des commutateurs pour un secteur angulaire déterminé du moteur sont commandés selon des lois de commande. L'ensemble des lois de commandes définit une table de commandes de l'onduleur. Un onduleur génère des pertes principalement liées à la conduction du courant à travers les composants de puissance (transistors MOS et diode de puissance) et à la commutation du courant dans ces composants de puissance.

Ces pertes diminuent le rendement de la commande du moteur et dégradent donc la fiabilité de l'onduleur.

Cela est en particulier le cas lorsqu'il est nécessaire de protéger l'onduleur de chocs ou d'un environnement austère par une couche protectrice, comme par exemple une couche de résine, qui freine la dissipation thermique.

La commande à 120° d'un onduleur triphasé permet de réduire les pertes dans les composants de puissance car elle permet de réduire le nombre de transistors en conduction et commutation à un instant donné.

De plus, cette commande nécessite peu de ressources matérielles et logicielles.

Pour pouvoir régler la vitesse du moteur, il est nécessaire de contrôler la valeur du courant dans les phases moteur.

Il est possible de réaliser cela via une commande de type *PWM* (« Pulse Width Modulation ») de l'onduleur.

Des lois de commande ont été développées spécifiquement pour optimiser le rendement électrique et thermique d'un moteur piloté par un onduleur à commande à 120° associée à une commande du type *PWM*, comme par exemple une commande de type « redressement synchrone ».

Cette commande est connue de l'art antérieur et répandue notamment dans les convertisseurs de type continu/continu (par exemple dans les convertisseurs ou hacheurs « BUCK »)

Une difficulté est d'améliorer le rendement de l'onduleur tout en conservant la simplicité de la commande à 120° du contrôle moteur, et en particulier de proposer une telle amélioration du rendement qui soit compatible avec une commande du type « redressement synchrone ».

Le document EP2605400A1 décrit un procédé de commande d'un onduleur régulant l'alimentation électrique d'un moteur comprenant un rotor et un stator, le procédé utilisant un signal numérique cyclique de commande de l'onduleur à une fréquence prédéterminée, le procédé comprenant la détection d'un changement d'angle du rotor relativement au stator et la synchronisation temporelle du signal numérique cyclique de commande sur un instant de détection du changement d'angle du rotor.

Le document US 2010/0127652 A1 présent un circuit d'entraînement de moteur, le circuit comprenant un onduleur incluant au moins un élément de commutation semi-conducteur, cet élément comprenant un empilement de couches semiconductrices de nitrure formées sur un substrat, une première électrode et une seconde électrode étant formées sur l'empilement, et une première électrode de grille étant formée entre la première électrode et la seconde électrode, l'élément présentant un fonctionnement en diode selon lequel une tension inférieure ou égale à une tension de seuil appliquée entre l'électrode de grille et la première électrode permet un courant électrique de la première électrode à la seconde électrode et bloque un courant électrique dans l'autre sens.

Le document STM : PWM MANAGEMENT FOR 3-PHASE BLDC MOTOR DRIVES USING THE ST7MC disponible à l'adresse https://www.st.com/resource/en/application note/an2009-pwm-management-for-3phase-bldc-motor-drives-using-the-st7mc-stmicroelectronics.pdf, décrit la démagnétisation de bobinages dans des moteurs triphasés.Le document EP3493393A1 mentionne un procédé de commande d'un moteur comprenant la détection d'une direction de courant à travers un commutateur et, lorsque le moteur a atteint une fin d'étape de commutation, l'activation du commutateur en fonction de la direction du courant.

**Présentation de l'invention**

Un but général de l'invention est de pallier les inconvénients des systèmes de régulation de l'état de la technique.

Notamment, un but de l'invention est de proposer une solution pour améliorer le rendement de l'onduleur tout en conservant la simplicité de la commande à 120° du contrôle moteur.

Le but est atteint dans le cadre de la présente invention grâce à un procédé de commande d'un onduleur triphasé selon une disposition de commande à 120° associée à une commande du type *PWM,* l'onduleur étant piloté par un contrôleur et configuré pour alimenter électriquement un moteur synchrone à aimant permanent d'un équipement embarqué dans un aéronef, le dit moteur comprenant un stator et un rotor adapté pour être entraîné en rotation relativement au stator lorsque le moteur est alimenté électriquement, l'onduleur comprenant trois branches, chacune comportant deux commutateurs associés à un bobinage moteur selon une disposition de commande à 120° d'un onduleur triphasé, caractérisé en ce que lorsqu'un commutateur d'une branche est commandée de l'état passant à l'état bloquant, l'autre commutateur de la dite branche est commandé pour être à l'état passant pendant un temps suffisant à la décharge magnétique du bobinage moteur associé à la dite branche.

L'équipement embarqué peut être par exemple un ventilateur, un compresseur ou une pompe.

Ledit procédé permet ainsi de mettre en oeuvre facilement une nouvelle loi de commandes qui permet de diminuer les pertes par conduction en forçant le courant à passer à travers un commutateur plutôt qu'une diode de puissance pendant une période dite de démagnétisation.

Cette diminution des pertes peut être mise en oeuvre pour une commande du type *PWM* avec ou sans commande de type « redressement synchrone ».

Avantageusement, mais facultativement, le procédé selon l'invention peut en outre comprendre au moins l'une des caractéristiques suivantes :

- tout au long de l'intervalle de temps de décharge magnétique d'un bobinage moteur associé à une branche, le signal qui pilote le commutateur qui reçoit le signal *PWM* est remplacé par un signal adapté pour maintenir le dit commutateur dans un état passant.
- la commande du type *PWM* comporte un redressement synchrone actif.
- tout au long de l'intervalle de temps de décharge magnétique d'un bobinage moteur associé à une branche, le signal qui pilote le commutateur qui reçoit le signal $\overline{PWM}$ est remplacé par un signal adapté pour maintenir ce dit commutateur dans un état bloquant.

- Une détermination de la vitesse du rotor par rapport au stator et un calcul par le contrôleur de la durée de l'intervalle de temps de décharge magnétique d'un bobinage moteur associé à une branche selon un relation affine de la valeur déterminée de la vitesse du rotor par rapport au stator, ladite relation affine étant préalablement déterminée et mise en mémoire dans le contrôleur.
- la relation affine est prédéterminée par la mise en oeuvre des étapes suivantes :

  - Estimation des impédances électriques du moteur pour différentes valeurs déterminées de la vitesse du rotor par rapport au stator ;
  - Résolution numérique des équations électriques régissant le moteur pour différentes valeurs déterminées de la vitesse du rotor par rapport au stator ;
  - Estimation de la durée de l'intervalle de temps de décharge magnétique d'un bobinage moteur pour différentes valeurs déterminées de la vitesse du rotor par rapport au stator ;
  - Détermination d'une relation affine de la durée estimée de l'intervalle de temps de décharge magnétique d'un bobinage moteur en fonction de la valeur déterminée de la vitesse du rotor par rapport au stator ;
  - Mise en mémoire des paramètres de la relation affine dans le contrôleur.

L'invention a également pour objet un contrôleur d'un onduleur triphasé selon une disposition de commande à 120° associée à une commande du type *PWM,* configuré pour alimenter électriquement un moteur synchrone à aimant permanent d'un équipement embarqué dans un aéronef, le dit moteur comprenant un stator et un rotor adapté pour être entraîné en rotation relativement au stator lorsque le moteur est alimenté électriquement, l'onduleur comprenant trois branches, chacune comportant deux commutateurs associés à un bobinage moteur selon une disposition de commande à 120° d'un onduleur triphasé, le dit contrôleur étant adapté pour :

- générer un premier signal numérique présentant deux niveaux de tension propre à commander la bascule de l'état passant à l'état bloquant d'un premier commutateur d'une branche.
- générer un second signal numérique présentant un niveau de tension propre à commander l'état passant du second commutateur de la dite branche pendant un temps suffisant à la décharge magnétique du bobinage moteur associé à la dite branche, lorsque le premier commutateur est commandée de l'état passant à l'état bloquant

Avantageusement, mais facultativement, le contrôleur selon l'invention peut en outre comprendre au moins l'une des caractéristiques suivantes :

- il est adapté pour remplacer un signal numérique *PWM* reçu par le commutateur tout au long de l'intervalle de temps de décharge magnétique d'un bobinage moteur associé à une branche, par un signal adapté pour maintenir le dit commutateur dans un état passant tout au long du dit intervalle.
- la disposition de commande à 120° est associée à une commande du type *PWM* avec redressement synchrone actif.
- il est adapté pour remplacer un signal numérique $\overline{PWM}$ reçu par le commutateur tout au long de l'intervalle de temps de décharge magnétique d'un bobinage moteur associé à une branche, par un signal adapté pour maintenir le dit commutateur dans un état bloquant tout au long du dit intervalle.
- il comprend une entrée d'une ligne de communication vers un capteur adapté pour mesurer une position ou une vitesse du rotor par rapport au stator du moteur, un support adapté pour garder en mémoire une valeur déterminée d'une vitesse et une relation affine prédéterminée de la durée de l'intervalle de temps de décharge magnétique d'un bobinage moteur associé à une branche en fonction de la valeur déterminée de la vitesse du moteur; et des moyens pour calculer en fonction de la valeur déterminée de la vitesse du moteur déterminée, une durée de l'intervalle de temps de décharge magnétique d'un bobinage moteur associé à une branche.

L'invention a également pour objet un système d'alimentation électrique d'un moteur, le moteur comprenant un stator et un rotor monté rotatif par rapport au stator, le système d'alimentation comprenant :

- un onduleur comprenant une pluralité de commutateurs commandés pour la régulation de l'alimentation électrique du moteur,
- un contrôleur de l'onduleur, et
- un capteur adapté pour mesurer une position ou une vitesse du rotor relativement au stator,

ledit contrôleur étant un contrôleur tel qu'on l'a décrit plus haut dans cette section.

Le procédé, le contrôleur et le système proposés permettent donc d'implémenter facilement une nouvelle loi de commandes qui permet de diminuer les pertes par conduction en forçant le courant à passer à travers un commutateur plutôt qu'une diode de puissance pendant une période dite de démagnétisation

**Présentation des figures**

D'autres caractéristiques et avantages de l'invention ressortiront encore de la description qui suit, laquelle est purement illustrative et non limitative, et doit être lue en regard des dessins annexés sur lesquels :

- la figure 1 représente de manière schématique un système d'alimentation électrique d'un moteur selon un mode de réalisation de l'invention ;
- la figure 2 représente les circuits électriques de l'onduleur et du moteur selon un mode de réalisation de l'invention ;
- les figures 3 et 4 représentent les circuits électriques de l'onduleur et du moteur durant une période dite de démagnétisation d'une part selon l'art antérieur et d'autre part selon un mode de réalisation de l'invention ;

**Description détaillée**

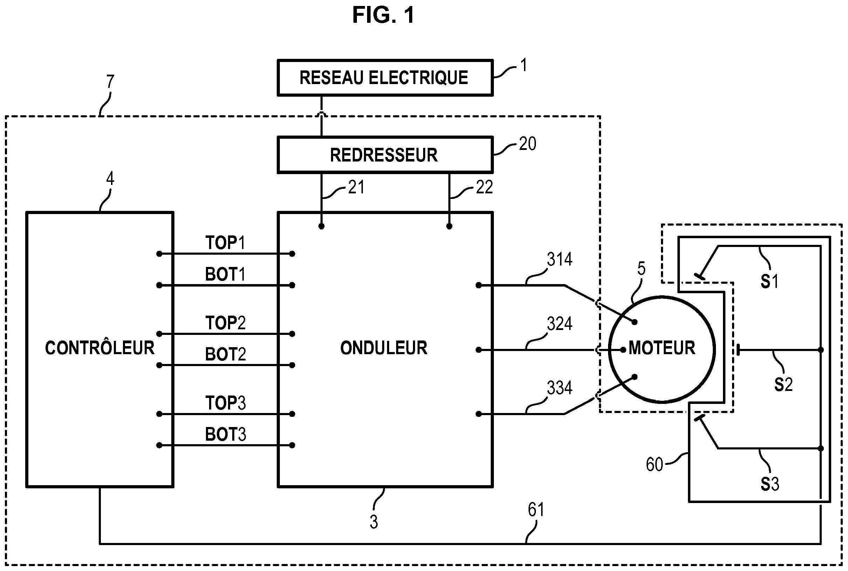

En référence à la **figure 1**, un équipement électrique destiné à l'assistance au pilotage et au confort des passagers (non représenté), comme par exemple un ventilateur, un compresseur ou une pompe comprend un moteur 5 électrique et un système 7 d'alimentation électrique du moteur 5.

De façon connue, le moteur 5 comprend un stator (non représenté) et un rotor (non représenté) monté rotatif par rapport au stator. Le rotor porte des aimants permanents, ou un bobinage.

Des bobinages (non représentés), portés par le stator, sont adaptés pour générer un champ magnétique sous l'effet duquel le rotor est entraîné en rotation relativement au stator.

Le rotor est sensiblement cylindrique et le stator s'étend sensiblement coaxialement autour ou à l'intérieur du rotor.

Le rotor est adapté pour tourner autour de son axe.

Un angle est défini entre le stator et le rotor par rapport à une position de référence du rotor relativement au stator.

Le système 7 d'alimentation comprend un redresseur 20, un onduleur 3 propre à alimenter électriquement le moteur 5, un contrôleur 4 de commande de l'onduleur 3, et un capteur 60 pour mesurer l'angle du rotor du moteur 5 relativement au stator, et optionnellement la vitesse du rotor du moteur 5 relativement au stator.

Le capteur 60 est typiquement un capteur à effet Hall adapté pour déterminer l'angle du rotor en fonction de l'orientation du champ magnétique vue par le capteur 60.

En particulier, le moteur 5 est découpé en secteurs angulaires (non représentés), et le capteur 60 est adapté pour identifier dans quel secteur angulaire se trouve l'angle formé entre le rotor et le stator.

Par exemple, le nombre de secteurs angulaires est égal à six et le capteur 60 comprend trois sondes à effet Hall, notées S1, S2, S3 sur la figure 1.

Le capteur 60 est relié électriquement au contrôleur 4 par une ligne qui porte le signale électrique 61.

Le contrôleur 4 et l'onduleur 3 sont reliés par six lignes électriques qui portent les signaux TOP1, BOT1, TOP2, BOT2, TOP3 et BOT3.

Le redresseur 20 est intercalé entre un réseau électrique 1, typiquement un réseau électrique d'aéronef, et l'onduleur 3.

Ce dernier est adapté à convertir la tension alternative convoyée par le réseau électrique 1 en une tension sensiblement continue d'alimentation de l'onduleur 3.

Le redresseur 20 est raccordé électriquement à l'onduleur 3 via une ligne positive 21, à un potentiel positif sensiblement constant, et via une ligne négative 22, à un potentiel négatif sensiblement constant.

L'onduleur et le moteur sont reliés par trois lignes électriques 314, 324 et 334.

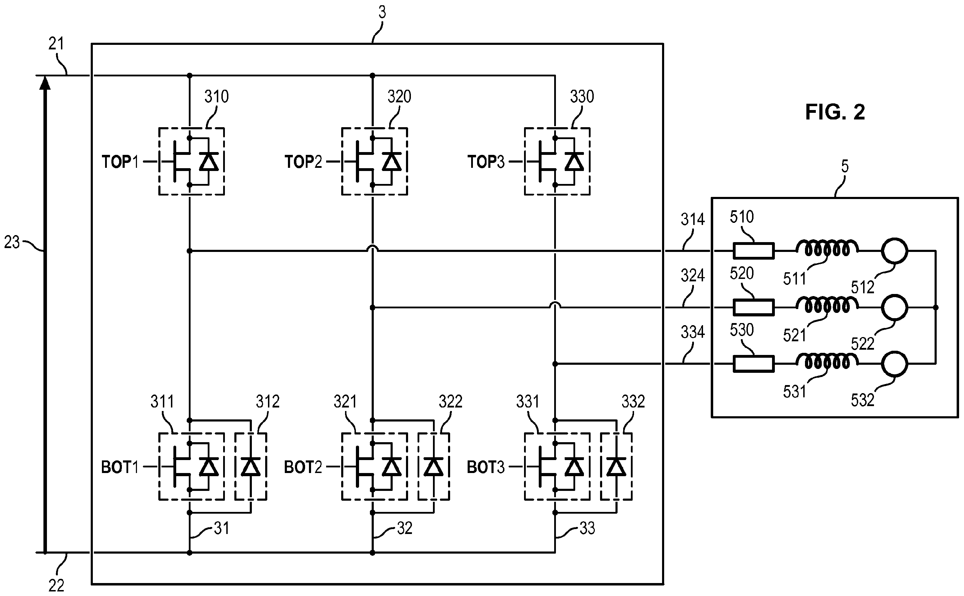

En référence à la **figure 2**, l'onduleur 3, alimenté par une tension sensiblement continue 23 entre la ligne positive 21 et la ligne négative 22, comprend comporte trois branches de commutation 31, 32, 33 montées en parallèle.

Chaque branche, respectivement 31, 32, 33, comporte deux commutateurs commandés, respectivement 310, 311, 320, 321, 330, 331, montés en série et entre lesquels est raccordée une ligne de sortie, respectivement 314, 324, 334, pour l'alimentation du moteur 5.

En particulier, les lignes de sortie 314, 324, 334 sont adaptées pour alimenter les bobinages du stator en courant électrique.

Dans l'exemple de réalisation de la **figure 2**, chaque ligne de sortie 314, 324, 334 correspond à une entrée de l'alimentation triphasée du moteur 5.

Pour chaque branche, respectivement 31, 32, 33, un premier commutateur, respectivement 310, 320, 330, est disposé entre la ligne positive 21 et la ligne de sortie, respectivement 314, 324, 334, associée, et un deuxième commutateur, respectivement 311, 321, 331 est disposé entre la ligne négative 22 et la ligne de sortie, respectivement 314, 324, 334 associée.

Chaque commutateur 310, 311, 320, 321, 330, 331 est apte à basculer entre un état passant, dans lequel il relie électriquement la ligne positive 21 ou négative 22 à la ligne de sortie 314, 324, 334, associée, et un état bloquant, dans lequel il isole électriquement lesdites lignes.

Chaque commutateur 310, 311, 320, 321, 330, 331 comporte de préférence un transistor MOSFET et sa diode intrinsèque.

Optionnellement, une seconde diode de puissance est associée à chaque commutateur 310, 311, 320, 321, 330, 331 en antiparallèle.

Les lignes de sortie 314, 324, 334, sont connectées à trois bobinages du stator du moteur 5.

Chaque bobinage a été schématisé électriquement par une résistance électrique (510, 520 et 530) qui correspond aux pertes par effet Joule dans le bobinage, une bobine non résistive (511, 521 et 531) qui correspond aux effets inductifs du bobinage et un générateur (512, 522 et 532) d'une force électromotrice.

La force électromotrice est proportionnelle à la vitesse du rotor.

Le contrôleur 4 est adapté pour générer six signaux numériques cycliques TOP1, BOT1, TOP2, BOT2, TOP3 et BOT3 de commande des commutateurs respectivement 310, 311, 320, 321, 330, 331 en fonction de l'angle mesuré du rotor relativement au stator et en fonction de la vitesse calculée par le contrôleur 4 via les mesures issues du capteur 60.

La vitesse du rotor par rapport au stator du moteur peut aussi être mesurée pas un capteur adapté et relié au contrôleur 4.

Par « signal numérique cyclique » on comprend un signal adapté pour prendre exclusivement deux valeurs V+ et V0 de tension, la première valeur de tension V+ correspondant à un « 1 » logique et la seconde valeur de tension V0 correspondant à un « 0 » logique, la première valeur étant supérieure à la deuxième valeur.

Le signal numérique cyclique alternant entre le premier niveau de tension V+ et le deuxième niveau de tension V0, est propre à commander successivement la fermeture et l'ouverture d'un commutateur.

La **table 1** est un exemple de table de lois de commande d'un onduleur à 120° associée à une commande du type *PWM* selon l'art antérieur.

**Table 1 : exemple de table de lois de commande d'un onduleur à 120° associée à une commande du type PWM**

| S3 | S2 | S1 | SECT | TOP1 | TOP2 | TOP3 | BOT1 | BOT2 | BOT3 |
|----|----|----|------|------|------|------|------|------|------|
| '0' | '0' | '1' | 1 | '0' | PWM | '0' | '1' | '0' | '0' |
| '1' | '0' | '1' | 5 | '0' | '0' | PWM | '1' | '0' | '0' |
| '1' | '0' | '0' | 4 | '0' | '0' | PWM | '0' | '1' | '0' |
| '1' | '1' | '0' | 6 | PWM | '0' | '0' | '0' | '1' | '0' |
| '0' | '1' | '0' | 2 | PWM | '0' | '0' | '0' | '0' | '1' |
| '0' | '1' | '1' | 3 | '0' | PWM | '0' | '0' | '0' | '1' |

Les colonnes « S1 », « S2 », « S3 » correspondent aux mesures du capteur 60 qui permettent de déterminer dans quel secteur angulaire se trouve l'angle formé entre le rotor et le stator.

La colonne « SECT » correspond à l'identification du secteur en fonction des mesures du capteur 60.

L'exemple proposé ici correspond à un nombre de 6 secteurs numéroté de 1 à 6.

Les colonnes « TOP1 », « TOP2 », « TOP3 », « BOT1 », « BOT2 » et « BOT3 » correspondent à des signaux numériques cycliques générés par le contrôleur et transmis vers les commutateurs de l'onduleur respectivement 310, 320, 330, 311, 321 et 331.

Un signal « 0 » correspond à un état bloquant de commutateur, un signal « 1 » correspond à un état passant du commutateur, et un signal « *PWM* » correspond à une modulation à largeur d'impulsion, c'est-à-dire un signal qui prend successivement les valeurs « 0 » et « 1 » et fait basculer alternativement le commutateur d'un état bloquant ou passant à l'autre.

Le signal « *PWM* » permet de régler la vitesse du moteur, par exemple en contrôlant le rapport entre la durée pendant laquelle ledit signal prend la valeur « 0 » par rapport à la durée pendant laquelle ledit signal prend la valeur « 1 ».

En fonction des mesures issues du capteur 60, le secteur angulaire dans lequel se trouve le rotor est déterminé.

A partir de cette information, le contrôleur 4 génère les six signaux en correspondance dans la table de lois de commande.

Les six signaux sont transmis aux six commutateurs, de sorte qu'une alimentation électrique du stator est produite.

Le champ magnétique généré par le stator est adapté pour appliquer une force sur le rotor qui permet le maintien de son mouvement rotatif par rapport au stator.

Lorsque l'orientation du rotor entre dans le secteur suivant, les mesures issues du capteur 60 sont modifiées et les différentes étapes ci-dessus sont à nouveau mises en oeuvre.

Pour chaque ligne du tableau, seuls deux signaux ne sont pas maintenus à « 0 » pendant toute la durée où le rotor est dans le secteur correspondant.

Un premier commutateur parmi les commutateurs 310, 320, 330 reçoit le signal « *PWM* », et un second commutateur parmi les commutateurs 311, 321, 331 d'une branche différente du premier commutateur reçoit le signal « 1 ».

On note A la branche parmi les branches 31, 32 et 33 correspondant au premier commutateur et B la branche associée au second commutateur.

Pour chaque ligne du tableau, un courant dit courant moteur passe par le bobinage moteur associé à la branche A en générant une force électromotrice positive.

Ce courant moteur passe ensuite par le bobinage moteur associé à la branche B en générant une force électromotrice négative.

Enfin le courant moteur passe à travers le transistor du second commutateur de la branche B qui reçoit le signal « 1 ».

Selon la valeur du signal « *PWM* », le courant moteur ne passe pas par les mêmes éléments de la branche A.

Lorsque le signal « *PWM* » vaut « 1 », le courant moteur passe à travers le premier commutateur qui reçoit le signal « *PWM* ».

Lorsque le signal « *PWM* » vaut « 0 », le courant moteur passe à travers le second commutateur de la branche A.

Comme ce second commutateur reçoit un signal maintenu à « 0 » durant toute la durée où le rotor est dans le secteur correspondant à la ligne du tableau, le courant moteur ne peut pas passer à travers le transistor. Il traverse la diode disposée en antiparallèle et éventuellement la seconde diode de puissance associée au commutateur si celle-ci est présente.

Le courant moteur s'établit après une période de transition, dite période de démagnétisation, qui a lieu au tout début de la phase temporelle correspondant à la ligne du tableau.

La **table 2** est un exemple de table de lois de commande d'un onduleur à 120° associée à une commande du type *PWM* avec redressement synchrone actif selon l'art antérieur.

*Table 2 : exemple de table de lois de commande d'un onduleur à 120° associée à une commande du type PWM avec redressement synchrone actif.*

| S3 | S2 | S1 | SECT | TOP1 | TOP2 | TOP3 | BOT1 | BOT2 | BOT3 |
|---|---|---|---|---|---|---|---|---|---|
| '0' | '0' | '1' | 1 | '0' | PWM | '0' | '1' | $\overline{PWM}$ | '0' |
| '1' | '0' | '1' | 5 | '0' | '0' | PWM | '1' | '0' | $\overline{PWM}$ |
| '1' | '0' | '0' | 4 | '0' | '0' | PWM | '0' | '1' | $\overline{PWM}$ |
| '1' | '1' | '0' | 6 | PWM | '0' | '0' | $\overline{PWM}$ | '1' | '0' |
| '0' | '1' | '0' | 2 | PWM | '0' | '0' | $\overline{PWM}$ | '0' | '1' |
| '0' | '1' | '1' | 3 | '0' | PWM | '0' | '0' | $\overline{PWM}$ | '1' |

La différence entre cette table et la table 1 correspond à la présence du signal $\overline{PWM}$ qui est le signal complémentaire du signal *PWM.* Lorsque l'un prend la valeur « 0 » l'autre prend la valeur « 1 » et inversement.

Lorsque le signal *PWM* est appliqué à un commutateur d'une branche, le signal $\overline{PWM}$ est appliqué à l'autre commutateur de ladite branche.

Le fonctionnement de l'onduleur commandé par cette table est proche du fonctionnement de l'onduleur commandé par la table 1.

En particulier, pour chaque ligne du tableau, on peut à nouveau définir un courant moteur qui passe à travers les bobinages moteur associés à deux branches A et B.

De même, selon la valeur du signal « *PWM* », le courant moteur ne passe pas par les mêmes éléments de la branche A.

Lorsque le signal « *PWM* » vaut « 1 », le courant moteur passe à travers le premier commutateur qui reçoit le signal « *PWM* »*.*

En revanche, lorsque le signal « *PWM* » vaut « 0 », le second commutateur de la branche A reçoit alors le signal $\overline{PWM}$ qui vaut « 1 ». Le courant moteur passe alors à travers le transistor.

L'intérêt d'une telle commande est de limiter les pertes par conduction électrique par rapport à la table 1. Les pertes par conduction sont en effet moindres lorsque le courant passe à travers le transistor que lorsque le courant passe à travers la diode disposée en antiparallèle et éventuellement la seconde diode de puissance associée au commutateur.

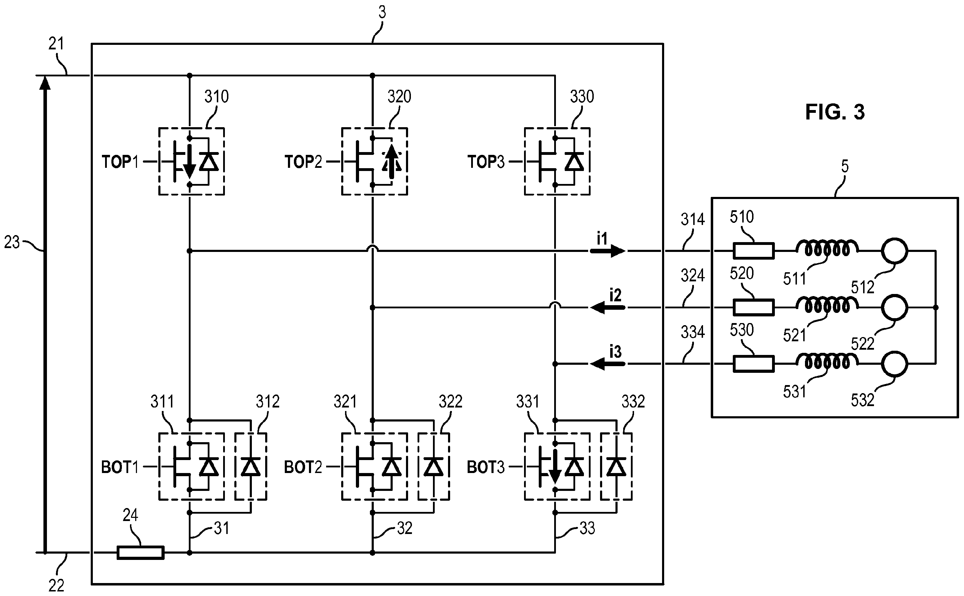

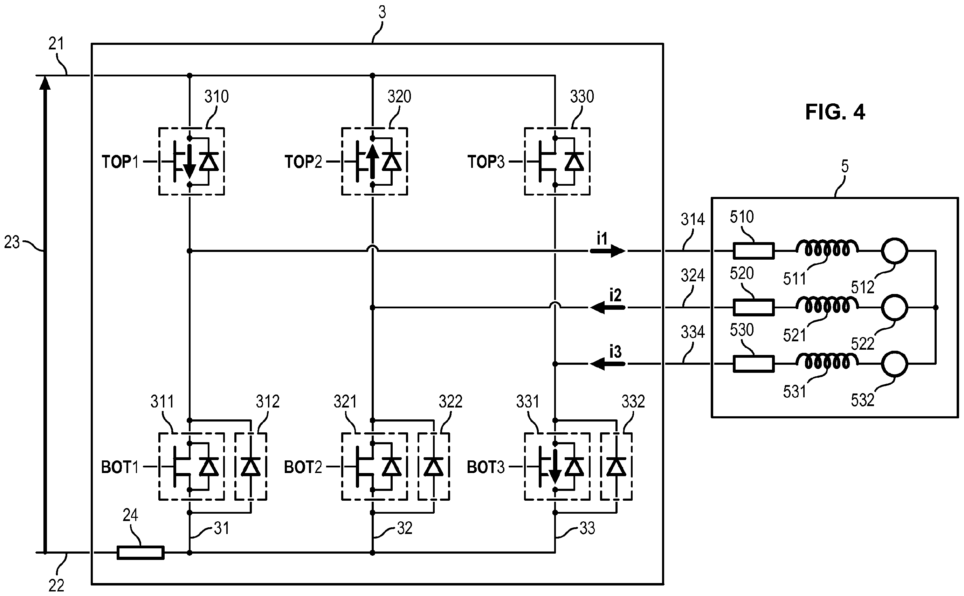

Les **figures 3 et 4** représentent les circuits électriques de l'onduleur et du moteur durant une période dite de démagnétisation d'une part selon l'art antérieur (figure 3) et d'autre part selon un mode de réalisation de l'invention (figure 4).

Les circuits électriques représentés sur les figures 3 et 4 sont proches de l'exemple illustré par la figure 2 : seule une résistance shunt 24 se situant sur la ligne négative 22 est ajoutée par rapport à cette figure 2.

La **figure 3** représente les circuits électriques de l'onduleur et du moteur durant une période particulière correspondant à une des lignes de la table 1.

Plus précisément, il s'agit de la période qui se situe immédiatement après la transition de la ligne « SECT » 6, correspondant à une phase 6, à la ligne « SECT » 2, correspondant à une phase 2.

Durant la phase 6, le commutateur 310 reçoit le signal « *PVVM* » et le commutateur 321 reçoit le signal « 1 ».

Dans cette situation, la branche A correspond à la branche 31, la branche B correspond à la branche 32, et le courant moteur passe au travers des bobines 511 et 521.

Les bobines 511 et 521 accumulent une énergie magnétique au cours de la phase 6.

Durant la phase 2, le commutateur 310 reçoit le signal « *PVVM* » et le commutateur 331 reçoit le signal « 1 ».

Dans cette situation, la branche A correspond à la branche 31 et la branche B correspond à la branche 33.

Durant toute la phase 2 un courant noté i1 sur la figure 3 s'écoule au travers de la bobine 511, et alternativement au travers du commutateur 310 (*PWM* = 1) ou au travers du commutateur 311 (*PWM* = 0). La figure 3 correspond au cas où *PWM* = 1, une flèche à travers le transistor du commutateur 310 indique le passage du courant i1.

Durant toute la phase 2 un courant noté i3 sur la figure 3 au travers de la bobine 531, et au travers du commutateur 331. Une flèche à travers le transistor dudit commutateur 331 indique le passage du courant i3.

Le courant i3 rejoint la ligne négative 22 et passe au travers de la résistance shunt 24. La mesure de la tension aux bornes de la résistance shunt 24 permet de mesurer le courant moteur.

Au tout début de cette phase 2 il existe une période de transition, dite période de démagnétisation pendant laquelle la bobine 521 évacue de l'énergie magnétique accumulée au cours de la phase 6.

Un courant électrique, dit courant de démagnétisation, et noté courant i2 sur la figure 3, se maintient à travers la bobine 521, le temps de cette période de démagnétisation c'est-à-dire le temps que l'énergie magnétique de la bobine se décharge.

Le courant de démagnétisation i2 circule sur la ligne 324 vers la branche 32. Ce courant i2 ne peut pas passer au travers des transistors des commutateurs 320 et 321 en état bloquant, ni au travers de l'éventuelle diode de puissance 322. Le courant i2 passe donc à travers la diode placée en antiparallèle au sein du commutateur 320, comme indiqué par une flèche sur la figure 3.

Durant la période de démagnétisation, la performance de l'onduleur est réduite par des pertes par conduction à travers cette diode au sein du commutateur 320.

Une fois l'énergie magnétique déchargée, le courant i2 s'annule, les courants i1 et i3 deviennent égaux au courant moteur, et la période de démagnétisation est terminée.

Il existe une période de démagnétisation pendant chaque période qui se situe immédiatement après la transition d'une ligne à la ligne suivante dans la table 1.

Pour chacune, le courant de démagnétisation s'écoule à travers une diode disposée en antiparallèle d'un transistor, occasionnant des pertes par conduction.

La **figure 4** représente les circuits électriques de l'onduleur et du moteur durant une période particulière correspondant à une des modes de réalisation de l'invention.

La situation est quasiment identique à la situation décrite plus haut pour la figure 3. En particulier on se trouve après la transition d'une phase à une phase suivante et il existe une période de transition, dite période de démagnétisation pendant laquelle la bobine 521 détient de l'énergie magnétique accumulée au cours de la phase précédente.

Le courant de démagnétisation noté i2 sur la figure 4 qui se maintient à travers la bobine 521 circule cette fois à travers le transistor du commutateur 320, car cette fois pendant la durée de la période de démagnétisation ledit transistor du commutateur 320 est maintenu en état passant et le transistor du commutateur 321 est maintenu en état bloquant.

Dans ce mode de réalisation de l'invention, la démagnétisation est contrôlée au sens où on fait passer le courant de démagnétisation à travers le transistor au lieu de la diode placée en antiparallèle pour toutes les périodes de démagnétisation.

Grâce à la démagnétisation contrôlée, la performance de l'onduleur est améliorée par rapport à la situation décrite dans la figure 3 car les pertes par conduction à travers la diode sont évitées.

Cette amélioration peut être apportée pour une table de lois de commande d'un onduleur à 120° associée à une commande du type *PWM* avec ou sans redressement synchrone actif, selon les tables 3 et 4.

La **table 3** est une table de lois de commande d'un onduleur à 120° associée à une commande du type *PWM* sans redressement synchrone actif avec démagnétisation contrôlée :

*Table 3 : table de lois de commande d'un onduleur à 120° associée à une commande du type PWM sans redressement synchrone actif avec démagnétisation contrôlée.*

| Séquence | SECT | TOP1 | TOP2 | TOP3 | BOT1 | BOT2 | BOT3 |
|---|---|---|---|---|---|---|---|
| Démagnétisation 3 → 1 | 1 | '0' | PWM | **'1'** | '1' | 0 | '0' |
| - | 1 | '0' | PWM | '0' | '1' | 0 | '0' |
| Démagnétisation 1 → 5 | 5 | '0' | '0' | PWM | '1' | **'1'** | 0 |
| - | 5 | '0' | '0' | PWM | '1' | '0' | 0 |
| Démagnétisation 5 → 4 | 4 | **'1'** | '0' | PWM | '0' | '1' | 0 |
| - | 4 | '0' | '0' | PWM | '0' | '1' | 0 |

(suite)

| Séquence | SECT | TOP1 | TOP2 | TOP3 | BOT1 | BOT2 | BOT3 |
|---|---|---|---|---|---|---|---|
| Démagnétisation 4 → 6 | 6 | PWM | '0' | '0' | 0 | '1' | **'1'** |
| - | 6 | PWM | '0' | '0' | 0 | '1' | '0' |
| Démagnétisation 6 → 2 | 2 | PWM | **'1'** | '0' | 0 | '0' | '1' |
| - | 2 | PWM | '0' | '0' | 0 | '0' | '1' |
| Démagnétisation 2 → 3 | 3 | '0' | PWM | '0' | **'1'** | 0 | '1' |
| - | 3 | '0' | PWM | '0' | '0' | 0 | '1' |

La table 3 est construite à partir de la table 1.

Entre chacune des lignes de la table 1, une ligne nommée « démagnétisation X->Y» en première colonne et associée à la transition du secteur précédent X vers le secteur Y a été ajoutée.

Pour chaque ligne de démagnétisation, les commandes envoyées aux transistors sont les mêmes que pour la phase Y suivante dans la table, sauf pour un transistor dont la commande est modifiée de « 0 » en « 1 ».

Ledit transistor ainsi placé en état passant est traversé par le courant de démagnétisation de la bobine qui était traversée par le courant moteur durant la phase précédente X et qui n'est plus traversée par le courant moteur durant la phase Y.

La durée de la période de démagnétisation correspond au temps mis pour que l'énergie magnétique accumulée par ladite bobine se décharge.

La **table 4** est une table de lois de commande d'un onduleur à 120° associée à une commande du type *PWM* avec redressement synchrone actif où les mêmes lignes pour les périodes de démagnétisation que dans la table 3 sont introduites.

*Table 4 : table de lois de commande d'un onduleur à 120° associée à une commande du type PWM avec redressement synchrone actif et démagnétisation contrôlée.*

| Séquence | SECT | TOP1 | TOP2 | TOP3 | BOT1 | BOT2 | BOT3 |
|---|---|---|---|---|---|---|---|
| Démagnétisation 3 → 1 | 1 | '0' | PWM | **'1'** | '1' | $\overline{PWM}$ | '0' |
| - | 1 | '0' | PWM | '0' | '1' | $\overline{PWM}$ | '0' |
| Démagnétisation 1 → 5 | 5 | '0' | '0' | PWM | '1' | **'1'** | $\overline{PWM}$ |
| - | 5 | '0' | '0' | PWM | '1' | '0' | $\overline{PWM}$ |
| Démagnétisation 5 → 4 | 4 | **'1'** | '0' | PWM | '0' | '1' | $\overline{PWM}$ |
| - | 4 | '0' | '0' | PWM | '0' | '1' | $\overline{PWM}$ |
| Démagnétisation 4 → 6 | 6 | PWM | '0' | '0' | $\overline{PWM}$ | '1' | **'1'** |
| - | 6 | PWM | '0' | '0' | $\overline{PWM}$ | '1' | '0' |
| Démagnétisation 6 → 2 | 2 | PWM | **'1'** | '0' | $\overline{PWM}$ | '0' | '1' |
| - | 2 | PWM | '0' | '0' | $\overline{PWM}$ | '0' | '1' |
| Démagnétisation 2 → 3 | 3 | '0' | PWM | '0' | **'1'** | $\overline{PWM}$ | '1' |

(suite)

| Séquence | SECT | TOP1 | TOP2 | TOP3 | BOT1 | BOT2 | BOT3 |
|----------|------|------|------|------|------|------|------|
| - | 3 | '0' | PWM | '0' | '0' | $\overline{PWM}$ | '1' |

La modification apportée précédemment dans la table 3 par rapport à la table 1, est apportée cette fois à la table 2.

La durée d'une période de démagnétisation peut être différente d'une ligne à l'autre de la table, car les équations électriques sont différentes selon que le courant de démagnétisation s'écoule vers la ligne positive 21, correspondant aux transistors 310, 320 et 330 ou vers la ligne négative 22, correspondant aux transistors 311, 321 et 331.

En outre, la résolution des équations évoquées ci-dessus nécessite des ressources matérielles et logicielles importantes.

Les **tables 5 et 6** sont des tables de lois de commande d'un onduleur à 120° associée à une commande du type *PWM* respectivement sans et avec redressement synchrone actif et des lignes de commande pour les périodes de démagnétisation modifiées respectivement par rapport à la table 3 et par rapport à la table 4.

La modification porte sur un maintien dans un état non modulé du transistor normalement commandé en *PWM*.

*Table 5 : table de lois de commande d'un onduleur à 120° associée à une commande du type PWM sans redressement synchrone actif et avec démagnétisation contrôlée et maintien PWM .*

| Séquence | SECT | TOP1 | TOP2 | TOP3 | BOT1 | BOT2 | BOT3 |
|----------|------|------|------|------|------|------|------|
| Démagnétisation 3 → 1 | 1 | '0' | '1' | **'1'** | '1' | '0' | '0' |
| 1 | 1 | '0' | PWM | '0' | '1' | '0' | '0' |
| Démagnétisation 1 → 5 | 5 | '0' | '0' | '1' | '1' | **'1'** | '0' |
| 5 | 5 | '0' | '0' | PWM | '1' | '0' | '0' |
| Démagnétisation 5 → 4 | 4 | **'1'** | '0' | '1' | '0' | '1' | '0' |
| 4 | 4 | '0' | '0' | PWM | '0' | '1' | '0' |
| Démagnétisation 4 → 6 | 6 | '1' | '0' | '0' | '0' | '1' | **'1'** |
| 6 | 6 | PWM | '0' | '0' | '0' | '1' | '0' |
| Démagnétisation 6 → 2 | 2 | '1' | **'1'** | '0' | '0' | '0' | '1' |
| 2 | 2 | PWM | '0' | '0' | '0' | '0' | '1' |
| Démagnétisation 2 → 3 | 3 | '0' | '1' | '0' | **'1'** | '0' | '1' |
| 3 | 3 | '0' | PWM | '0' | '0' | '0' | '1' |

*Table 6 : table de lois de commande d'un onduleur à 120° associée à une commande du type PWM avec redressement synchrone actif, démagnétisation contrôlée et maintien PWM .*

| Séquence | SECT | TOP1 | TOP2 | TOP3 | BOT1 | BOT2 | BOT3 |
|----------|------|------|------|------|------|------|------|
| Démagnétisation 3 → 1 | 1 | '0' | '1' | **'1'** | '1' | '0' | '0' |
| 1 | 1 | '0' | PWM | '0' | '1' | $\overline{PWM}$ | '0' |
| Démagnétisation 1 → 5 | 5 | '0' | '0' | '1' | '1' | **'1'** | '0' |

(suite)

| Séquence | SECT | TOP1 | TOP2 | TOP3 | BOT1 | BOT2 | BOT3 |
|---|---|---|---|---|---|---|---|
| 5 | 5 | '0' | '0' | PWM | '1' | '0' | $\overline{PWM}$ |
| Démagnétisation 5 → 4 | 4 | **'1'** | '0' | '1' | '0' | '1' | '0' |
| 4 | 4 | '0' | '0' | PWM | '0' | '1' | $\overline{PWM}$ |
| Démagnétisation 4 → 6 | 6 | '1' | '0' | '0' | '0' | '1' | **'1'** |
| 6 | 6 | PWM | '0' | '0' | $\overline{PWM}$ | '1' | '0' |
| Démagnétisation 6 → 2 | 2 | '1' | **'1'** | '0' | '0' | '0' | '1' |
| 2 | 2 | PWM | '0' | '0' | $\overline{PWM}$ | '0' | '1' |
| Démagnétisation 2 → 3 | 3 | '0' | '1' | '0' | **'1'** | '0' | '1' |
| 3 | 3 | '0' | PWM | '0' | '0' | $\overline{PWM}$ | '1' |

Dans ces modes de réalisation de l'invention on impose l'état du transistor normalement commandé en *PWM* à '1' lors de la période de démagnétisation.

Cela permet de limiter le nombre d'équations électriques à considérer et de réduire la difficulté technique pour évaluer une durée de période de démagnétisation.

Les équations électriques sont résolues numériquement pour différentes valeurs de la vitesse de rotation du rotor par rapport au stator.

Il est possible d'améliorer la précision de la résolution de l'équation en prenant en compte :

- une mesure de la température de veine d'air qui permet d'affiner le calcul du courant moteur,
- une mesure précise de la tension continue 23,
- une mesure de la température du stator du moteur qui permet d'affiner la valeur de la résistance.
- une mesure du courant moteur au moment du changement de secteur (via la mesure par la résistance shunt 24 par exemple).

Cette résolution est prédéterminée avant la mise en fonctionnement de l'onduleur, et permet d'obtenir différents couples vitesse du rotor et durée de la période de démagnétisation.

La durée de la période de démagnétisation est approximée par une fonction affine de la vitesse du rotor et il est possible de créer une table de correspondance entre vitesse du rotor et durée de période de démagnétisation et de la stocker en mémoire dans le contrôleur.

Comme pour l'effet de la vitesse du rotor, il est possible de prendre en compte également l'effet de la tension continue 23 qui alimente l'onduleur sur la durée de la période de démagnétisation.

Une table de correspondance à deux entrées (valeur déterminée de la vitesse du rotor et valeur de la tension continue 23) une sortie (durée de la période de démagnétisation) peut être générée et mise en mémoire du contrôleur.

Une autre solution possible serait de générer un modèle électrique équivalent du moteur et de le simuler directement sur le contrôleur en fonction des mesures reçues.

Pour cela, des équations électriques du moteur peuvent être utilisées pour simuler son comportement.

Dans l'exemple de la table 4 avec redressement synchrone actif et « démagnétisation contrôlée » active, les équations électriques sont alors les suivantes :

Dans le cas du changement de secteur « 6 vers 2 », ou « 3 vers 1 » ou « 5 vers 4 » :

$$\text{si PWM} = \text{'1'} : \text{Rph} \times \text{i(t)} + \text{Lph} \times \frac{\text{di(t)}}{\text{dt}} \approx \frac{1}{3} \times (3 \times \text{E(t)} - \text{Udc}) \qquad (\textbf{\textit{EQ1.1}})$$

$$\text{si PWM} = \text{'0'} : \text{Rph} \times \text{i(t)} + \text{Lph} \times \frac{\text{di(t)}}{\text{dt}} \approx \frac{1}{3} \times (3 \times \text{E(t)} - 2 \times \text{Udc}) \qquad (\textbf{\textit{EQ1.2}})$$

Dans le cas du changement de secteur « 1 vers 5 », ou « 4 vers 6 » ou « 2 vers 3 » :

$$\text{si PWM = '1' : Rph} \times i(t) + \text{Lph} \times \frac{di(t)}{dt} \approx \frac{1}{3} \times (-3 \times E(t) - Udc) \qquad (\textbf{\textit{EQ2.1}})$$

$$\text{si PWM = '0' : Rph} \times i(t) + \text{Lph} \times \frac{di(t)}{dt} \approx \frac{1}{3} \times \left(-3 \times E(t)\right) \qquad (\textbf{\textit{EQ2.2}})$$

Avec

◦Rph est la résistance phase neutre du moteur, c'est-à-dire la valeur commune des résistances 510, 520, 530 des bobinages.
◦Lph est l'inductance phase neutre du moteur c'est-à-dire la valeur commune des inductances 511, 521, 531 des bobinages.
◦E est la force électromotrice entre phase et neutre du moteur (proportionnelle à la vitesse du moteur)
oUdc est la tension continue 23
oi(t) est le courant de démagnétisation

Les autres éléments (caractéristiques des transistors, des diodes) sont négligés.
Les pertes évitées sont d'autant plus significatives que la puissance de la machine est importante. En effet les diodes de puissance, par exemple de type Schottky ne peuvent pas supporter de fortes intensités de courant sans que leurs performances soient dégradées.
A titre d'exemple, des tests ont été menés sur un onduleur qui alimente un moteur selon une loi de commande à 120°.
Les résultats sont présentés dans la **table 7** suivante :

*Table 7 : comparaison des pertes totales en conductions dans 4 types différents de commande moteur.*

| Type commande moteur | Pertes totales | Gain sur les pertes |
|---|---|---|
| Table de pilotage 120° (référence) | 1,84W | référence |
| Table de pilotage 120° avec démagnétisation contrôlée | 1,65 W | -10,00% |
| Table de pilotage 120° avec redressement synchrone | 0,92 W | -50,00% |
| Table de pilotage 120° avec redressement synchrone actif et démagnétisation contrôlée | 0,72 W | -60,00% |

La première ligne correspond à un onduleur qui alimente un moteur selon une loi de commande à 120° sans redressement synchrone actif ni démagnétisation contrôlée.
Les pertes correspondantes constituent la référence pour estimer le gain sur les pertes des autres types de commande présentées dans les lignes suivantes.
A la deuxième ligne, l'ajout de la démagnétisation contrôlée à la loi de commande à 120° de référence permet de diminuer, dans cet exemple, de 10% les pertes totales en conduction.
Dans cet exemple de mise en oeuvre de la démagnétisation contrôlée, la durée de la période de démagnétisation est approximée par une fonction affine de la vitesse du rotor et une table de correspondance entre vitesse du rotor et durée de période de démagnétisation est stockée en mémoire dans le contrôleur.
A la troisième ligne, l'ajout du redressement synchrone à la loi de commande à 120° de référence permet de diminuer, dans cet exemple, de 50% les pertes totales en conduction.
Enfin à la quatrième ligne, l'ajout de la démagnétisation contrôlée et du redressement synchrone à la loi de commande à 120° de référence permet de diminuer, dans cet exemple, de 60% les pertes totales en conduction.
La démagnétisation contrôlée a été présentée dans cette section comme un ajout à deux exemples de tables de lois de commande d'un onduleur à 120° associée à une commande du type *PWM* avec ou sans redressement synchrone actif.
La démagnétisation contrôlée peut être mise en oeuvre dans d'autres exemples de tables de lois de commande d'un onduleur à 120° comme par exemple la table du type 120° square-wave alternatively leading PWM (table 8), ou bien la table du type 120° square-wave symmetrical PWM (table 9).

*Table 8 : exemple de table de lois de commande d'un onduleur à 120°square-wave alternatively leading PWM.*

| Position du moteur | TOP1 | TOP2 | TOP3 | BOT1 | BOT2 | BOT3 |
|---|---|---|---|---|---|---|
| 1 | '0' | '1' | '0' | PWM | '0' | '0' |
| 2 | '0' | '0' | PWM | '1' | '0' | '0' |
| 3 | '0' | '0' | '1' | '0' | PWM | '0' |
| 4 | PWM | '0' | '0' | '0' | '1' | '0' |
| 5 | '1' | '0' | '0' | '0' | '0' | PWM |
| 6 | '0' | PWM | '0' | '0' | '0' | '1' |

*Table 9 : exemple de table de lois de commande d'un onduleur à 120° square-wave symmetrical PWM*

| Position du moteur | TOP1 | TOP2 | TOP3 | BOT1 | BOT2 | BOT3 |
|---|---|---|---|---|---|---|
| 1 | '0' | '1' | '0' | PWM | '0' | '0' |
| 2 | '0' | PWM | '0' | '1' | '0' | '0' |
| 3 | '0' | '0' | PWM | '1' | '0' | '0' |
| 4 | '0' | '0' | '1' | PWM | '0' | '0' |
| 5 | '0' | '0' | '1' | '0' | PWM | '0' |
| 6 | '0' | '0' | PWM | '0' | '1' | '0' |
| 7 | PWM | '0' | '0' | '0' | '1' | '0' |
| 8 | '1' | '0' | '0' | '0' | PWM | '0' |
| 9 | '1' | '0' | '0' | '0' | '0' | PWM |
| 10 | PWM | '0' | '0' | '0' | '0' | '1' |
| 11 | '0' | PWM | '0' | '0' | '0' | '1' |
| 12 | '0' | '1' | '0' | '0' | '0' | PWM |

Comme pour les exemples précédents, TOP1, BOT1, TOP2, BOT2, TOP3 et BOT3 sont des signaux numériques cycliques de commande de six commutateurs qui sont associés par paire. Les commutateurs associés sont ceux qui sont commandés d'une part par les signaux TOP1 et BOT1, d'autre part par les signaux TOP2 et BOT2 et enfin par les signaux TOP3 et BOT3.

Pour mettre en oeuvre la démagnétisation contrôlée dans les exemples des tables 8 et 9 de lois de commande d'un onduleur à 120°, on peut rajouter entre deux lignes successives X et Y une ligne de commande « démagnétisation X->Y».

Pour chaque ligne de démagnétisation, les commandes envoyées aux transistors sont les mêmes que pour la ligne Y, sauf pour un transistor dont la commande est modifiée de « 0 » en « 1 ». Il s'agit du transistor associé au transistor qui est commandé en « 1 » ou en « PWM » sur la ligne X et en « 0 » sur la ligne Y.

**Revendications**

1. Procédé de commande d'un onduleur (3) triphasé selon une disposition de commande à 120° associée à une commande du type *PWM* sans redressement synchrone actif, l'onduleur (3) étant piloté par un contrôleur (4) et configuré pour alimenter électriquement un moteur (5) synchrone à aimant permanent d'un équipement embarqué dans un aéronef, le dit moteur (5) comprenant un stator et un rotor adapté pour être entraîné en rotation relativement au stator lorsque le moteur (5) est alimenté électriquement, l'onduleur (3) comprenant trois branches (31, 32, 33), chacune comportant deux commutateurs (310, 311, 320, 321 et 330, 331) associés à un bobinage moteur selon une disposition de commande à 120° d'un onduleur triphasé, chaque commutateur comprenant un transistor et une diode disposée en antiparallèle, **caractérisé en ce que** lorsqu'un commutateur d'une branche est commandé

- durant un premier intervalle de temps où l'angle formé entre le stator et le rotor est dans un premier secteur angulaire de la disposition de commande à 120° par un signal adapté pour maintenir le commutateur dans un état passant ou par un signal *PWM* et,

- durant un deuxième intervalle de temps où l'angle formé entre le stator et le rotor est dans un deuxième secteur angulaire suivant le premier secteur angulaire dans la disposition de commande à 120° par un signal adapté pour maintenir le commutateur dans un état bloquant, l'autre commutateur de la dite branche est commandé au passage de l'angle formé entre le stator et le rotor du premier secteur angulaire au deuxième secteur angulaire pour être à l'état passant de sorte à faire passer un courant électrique à travers le bobinage moteur associé à la dite branche et le transistor de l'autre commutateur pendant un temps suffisant à la décharge magnétique du bobinage moteur associé à la dite branche.

2. Procédé selon la revendication 1, **caractérisé en ce que**, tout au long de l'intervalle de temps de décharge magnétique d'un bobinage moteur associé à une branche, le signal qui pilote le commutateur qui reçoit le signal *PWM* est remplacé par un signal adapté pour maintenir le dit commutateur dans un état passant.

3. Procédé de commande d'un onduleur (3) triphasé selon une disposition de commande à 120° associée à une commande du type *PWM* avec redressement synchrone actif, l'onduleur (3) étant piloté par un contrôleur (4) et configuré pour alimenter électriquement un moteur (5) synchrone à aimant permanent d'un ventilateur à bord d'un aéronef, le dit moteur comprenant un stator et un rotor adapté pour être entraîné en rotation relativement au stator lorsque le moteur est alimenté électriquement, l'onduleur (3) comprenant trois branches (31, 32, 33), chacune comportant deux commutateurs (310, 311, 320, 321 et 330, 331) associés à un bobinage moteur selon une disposition de commande à 120° d'un onduleur triphasé, chaque commutateur comprenant un transistor et une diode disposée en antiparallèle, un commutateur haut parmi les deux commutateurs de chaque branche est disposé entre un potentiel positif sensiblement constant et le bobinage moteur, un commutateur bas parmi les deux commutateurs de chaque branche étant disposé entre le bobinage moteur et un potentiel négatif sensiblement constant **caractérisé en ce que** dans une branche durant un premier intervalle de temps où l'angle formé entre le stator et le rotor est dans un premier secteur angulaire de la disposition de commande à 120° et un deuxième intervalle de temps où l'angle formé entre le stator et le rotor est dans un deuxième secteur angulaire suivant le premier secteur angulaire dans la disposition de commande à 120°,

lorsque le commutateur bas est commandé par un signal adapté pour le maintenir dans un état passant durant le premier intervalle de temps, et par un signal adapté pour le maintenir dans un état bloquant durant le deuxième intervalle de temps, ou

lorsque le commutateur haut est commandé par un signal *PWM* durant le premier intervalle de temps et par un signal adapté pour le maintenir dans un état bloquant durant le deuxième intervalle de temps,

, l'autre commutateur de la dite branche est commandé au passage de l'angle formé entre le stator et le rotor du premier secteur angulaire au deuxième secteur angulaire pour être à l'état passant de sorte à faire passer un courant électrique à travers le bobinage moteur associé à la dite branche et le transistor de l'autre commutateur pendant un temps suffisant à la décharge magnétique du bobinage moteur associé à la dite branche.

4. Procédé selon la revendication 3, **caractérisé en ce que**, tout au long de l'intervalle de temps de décharge magnétique d'un bobinage moteur associé à une branche, le signal qui pilote le commutateur qui reçoit le signal *PWM* est remplacé par un signal adapté pour maintenir le dit commutateur dans un état passant

5. Procédé selon la revendication 4, **caractérisé en ce que** tout au long de l'intervalle de temps de décharge magnétique d'un bobinage moteur associé à une branche, le signal qui pilote le commutateur qui reçoit le signal $\overline{PWM}$ est remplacé par un signal adapté pour maintenir ce dit commutateur dans un état bloquant.

6. Procédé selon l'une des revendications 1 à 5 qui comprend les étapes suivantes :

- Détermination de la vitesse du rotor par rapport au stator ;
- Calcul par le contrôleur (4) de la durée de l'intervalle de temps de décharge magnétique d'un bobinage moteur associé à une branche selon un relation affine de la valeur déterminée de la vitesse du rotor par rapport au stator, ladite relation affine étant préalablement déterminée et mise en mémoire dans le contrôleur.

7. Procédé selon la revendication 6 **caractérisé en ce que** la relation affine est prédéterminée par la mise en oeuvre des étapes suivantes :

- Estimation des impédances électriques du moteur (5) pour différentes valeurs déterminées de la vitesse du rotor par rapport au stator ;
- Résolution numérique des équations électriques régissant le moteur (5) pour différentes valeurs déterminées de la vitesse du rotor par rapport au stator ;
- Estimation de la durée de l'intervalle de temps de décharge magnétique d'un bobinage moteur pour différentes valeurs déterminées de la vitesse du rotor par rapport au stator ;
- Détermination d'une relation affine de la durée estimée de l'intervalle de temps de décharge magnétique d'un bobinage moteur en fonction de la valeur déterminée de la vitesse du rotor par rapport au stator ;
- Mise en mémoire des paramètres de la relation affine dans le contrôleur.

8. Contrôleur (4) d'un onduleur (3) triphasé selon une disposition de commande à 120° associée à une commande du type *PWM* sans redressement synchrone actif, configuré pour alimenter électriquement un moteur (5) synchrone à aimant permanent d'un équipement embarqué dans un aéronef, le dit moteur comprenant un stator et un rotor adapté pour être entraîné en rotation relativement au stator lorsque le moteur (5) est alimenté électriquement, l'onduleur (3) comprenant trois branches (31, 32, 33), chacune comportant deux commutateurs (310, 311, 320, 321 et 330, 331) associés à un bobinage moteur selon une disposition de commande à 120° d'un onduleur triphasé, chaque commutateur comprenant un transistor et une diode disposée en antiparallèle, le dit contrôleur (4) étant adapté pour :

- Générer un premier signal numérique présentant deux niveaux de tension propre à commander un premier commutateur d'une branche soit dans un état passant soit alternativement basculé d'un état bloquant à un état passant selon un signal *PWM* durant un premier intervalle de temps où l'angle formé entre le stator et le rotor est dans un premier secteur angulaire de la disposition de commande à 120° et, dans un état bloquant durant un deuxième intervalle de temps où l'angle formé entre le stator et le rotor est dans un deuxième secteur angulaire suivant le premier secteur angulaire dans la disposition de commande à 120° .
- générer un second signal numérique présentant un niveau de tension propre à commander au passage de l'angle formé entre le stator et le rotor du premier secteur angulaire au deuxième secteur angulaire l'état passant du second commutateur de la dite branche de sorte à faire passer un courant électrique à travers le bobinage moteur associé à la dite branche et le transistor du second commutateur pendant un temps suffisant à la décharge magnétique du bobinage moteur associé à la dite branche.

9. Contrôleur (4) d'un onduleur (3) selon la revendication 8 **caractérisé en ce qu'**il est adapté pour remplacer un signal numérique *PWM* reçu par le commutateur tout au long de l'intervalle de temps de décharge magnétique d'un bobinage moteur associé à une branche, par un signal adapté pour maintenir le dit commutateur dans un état passant tout au long du dit intervalle.

10. Contrôleur (4) d'un onduleur (3) triphasé selon une disposition de commande à 120° associée à une commande du type *PWM* avec redressement synchrone actif, configuré pour alimenter électriquement un moteur (5) synchrone à aimant permanent d'un ventilateur à bord d'un aéronef, le dit moteur comprenant un stator et un rotor adapté pour être entraîné en rotation relativement au stator lorsque le moteur (5) est alimenté électriquement, l'onduleur (3) comprenant trois branches (31, 32, 33), chacune comportant deux commutateurs (310, 311, 320, 321 et 330, 331) associés à un bobinage moteur selon une disposition de commande à 120° d'un onduleur triphasé, chaque commutateur comprenant un transistor et une diode disposée en antiparallèle, un commutateur haut parmi les deux commutateurs de la branche est disposé entre un potentiel positif sensiblement constant et le bobinage moteur, un commutateur bas parmi les deux commutateurs de la branche étant disposé entre le bobinage moteur et un potentiel négatif sensiblement constant,
le dit contrôleur (4) étant adapté pour :

- générer un premier signal numérique présentant deux niveaux de tension propre à commander

dans une branche durant un premier intervalle de temps où l'angle formé entre le stator et le rotor est dans un premier secteur angulaire de la disposition de commande à 120° et un deuxième intervalle de temps où l'angle formé entre le stator et le rotor est dans un deuxième secteur angulaire suivant le premier secteur angulaire dans la disposition de commande à 120°,
un premier commutateur bas dans un état passant durant le premier intervalle de temps, et dans un état bloquant durant le deuxième intervalle de temps, ou
un premier commutateur haut alternativement basculé d'un état bloquant à un état passant selon un signal *PWM* durant le premier intervalle de temps, et dans un état bloquant durant le deuxième intervalle de temps,

- générer un second signal numérique présentant un niveau de tension propre à commander au passage de l'angle formé entre le stator et le rotor du premier secteur angulaire au deuxième secteur angulaire l'état passant du second commutateur de la dite branche de sorte à faire passer un courant électrique à travers le bobinage moteur associé à la dite branche et le transistor du second commutateur pendant un temps suffisant à la décharge magnétique du bobinage moteur associé à la dite branche.

11. Contrôleur (4) d'un onduleur (3) selon la revendication 10 **caractérisé en ce qu'**il est adapté pour remplacer un signal numérique *PWM* reçu par le commutateur tout au long de l'intervalle de temps de décharge magnétique d'un bobinage moteur associé à une branche, par un signal adapté pour maintenir le dit commutateur dans un état passant tout au long du dit intervalle.

12. Contrôleur (4) d'un onduleur (3) selon la revendication 11 **caractérisé en ce qu'**il est adapté pour remplacer un signal numérique $\overline{PWM}$ reçu par le commutateur tout au long de l'intervalle de temps de décharge magnétique d'un bobinage moteur associé à une branche, par un signal adapté pour maintenir le dit commutateur dans un état bloquant tout au long du dit intervalle.

13. Contrôleur (4) d'un onduleur (3) selon l'une des revendications 8 à 12 **caractérisé en ce qu'**il comprend une entrée d'une ligne (61) de communication vers un capteur (60) adapté pour mesurer une position ou une vitesse du rotor par rapport au stator du moteur (5), un support adapté pour garder en mémoire une valeur déterminée d'une vitesse et une relation affine prédéterminée de la durée de l'intervalle de temps de décharge magnétique d'un bobinage moteur associé à une branche en fonction de la valeur déterminée de la vitesse du moteur; et des moyens pour calculer en fonction de la valeur déterminée de la vitesse du moteur déterminée, une durée de l'intervalle de temps de décharge magnétique d'un bobinage moteur associé à une branche.

14. Système (7) d'alimentation électrique d'un moteur (5), ledit moteur (5) comprenant un stator et un rotor monté rotatif par rapport au stator, le système d'alimentation (7) comprenant :

- un onduleur (3) comprenant une pluralité de commutateurs (310, 311, 320, 321 et 330, 331) commandés pour la régulation de l'alimentation électrique du moteur,
- un contrôleur (4) de l'onduleur (3), et
- un capteur (60) adapté pour mesurer une position ou une vitesse du rotor relativement au stator,

ledit contrôleur (4) étant un contrôleur selon l'une des revendications 8 à 13.

## Patentansprüche

1. Verfahren zur Steuerung eines Dreiphasen-Umrichters (3) gemäß einer 120°-Steuerungsanordnung, die einer Steuerung vom Typ *PWM* ohne aktive Synchrongleichrichtung zugeordnet ist, wobei der Umrichter (3) von einem Controller (4) gesteuert wird und ausgelegt ist, um einen Synchronmotor (5) mit Permanentmagnet einer Onboard-Ausrüstung eines Luftfahrzeugs elektrisch zu versorgen, wobei der Motor (5) einen Stator und einen Rotor umfasst, der geeignet ist, relativ zum Stator drehend angetrieben zu werden, wenn der Motor (5) elektrisch versorgt wird, wobei der Umrichter (3) drei Abzweigungen (31, 32, 33) umfasst, die jeweils zwei Schalter (310, 311 , 320, 321 und 330, 331) aufweisen, die einer Motorwicklung gemäß einer 120°-Steuerungsanordnung eines Dreiphasen-Umrichters zugeordnet sind, wobei jeder Schalter einen Transistor und eine Diode umfasst, die antiparallel angeordnet ist, **dadurch gekennzeichnet, dass**, wenn ein Schalter einer Abzweigung gesteuert wird,

- während eines ersten Zeitintervalls, in dem der zwischen dem Stator und dem Rotor gebildete Winkel in einem ersten Winkelsektor der 120°-Steuerungsanordnung ist, von einem Signal, das geeignet ist, den Schalter in einem Ein-Zustand zu halten, oder von einem *PWM*-Signal, und
- während eines zweiten Zeitintervalls, in dem der zwischen dem Stator und dem Rotor gebildete Winkel in einem zweiten Winkelsektor nach dem ersten Winkelsektor in der 120°-Steuerungsanordnung ist, von einem Signal, das geeignet ist, den Schalter in einem Aus-Zustand zu halten,

der andere Schalter der Abzweigung beim Übergang aus dem zwischen dem Stator und dem Rotor gebildeten Winkel aus dem ersten Winkelsektor in den zweiten Winkelsektor gesteuert wird, um derart im Ein-Zustand zu sein, dass während einer Zeit, die für die magnetische Entladung der der Abzweigung zugeordneten Motorwicklung ausreicht, ein elektrischer Strom durch die der Abzweigung zugeordnete Motorwicklung und den Transistor des anderen Schalters fließt.

2. Verfahren nach Anspruch 1, **dadurch gekennzeichnet, dass** während des gesamten Zeitintervalls der magnetischen Entladung einer Motorwicklung, die einer Abzweigung zugeordnet ist, das Signal, das den Schalter steuert, der das PWM-Signal empfängt, durch ein Signal ersetzt wird, das geeignet ist, den Schalter in einem Ein-Zustand zu halten

3. Verfahren zur Steuerung eines Dreiphasen-Umrichters (3) gemäß einer 120°-Steuerungsanordnung, die einer Steuerung vom Typ *PWM* mit aktiver Synchrongleichrichtung zugeordnet ist, wobei der Umrichter (3) von einem Controller (4) gesteuert wird und ausgelegt ist, um einen Synchronmotor (5) mit Permanentmagnet eines Lüfters an Bord eines Luftfahrzeugs elektrisch zu versorgen, wobei der Motor einen Stator und einen Rotor umfasst, der geeignet ist, relativ zum Stator drehend angetrieben zu werden, wenn der Motor elektrisch versorgt wird, wobei der Umrichter (3) drei Abzweigungen (31, 32, 33) umfasst, die jeweils zwei Schalter (310, 311 , 320, 321 und 330, 331) aufweisen, die einer Motorwicklung gemäß einer 120°-Steuerungsanordnung eines Dreiphasen-Umrichters zugeordnet sind, wobei jeder Schalter einen Transistor und eine Diode umfasst, die antiparallel angeordnet ist, wobei ein hoher Schalter von den zwei Schaltern jeder Abzweigung zwischen einem etwa konstanten positiven Potential und der Motorwicklung angeordnet ist, wobei ein niedriger Schalter von den zwei Schaltern jeder Abzweigung zwischen der Motorwicklung und einem etwa konstanten negativen Potential angeordnet ist, **dadurch gekennzeichnet, dass** in einer Abzweigung während eines ersten Zeitintervalls, in dem der zwischen dem Stator und dem Rotor gebildete Winkel in einem ersten Winkelsektor der 120°-Steuerungsanordnung ist, und eines zweiten Zeitintervalls, in dem der zwischen dem Stator und dem Rotor gebildete Winkel in einem zweiten Winkelsektor nach dem ersten Winkelsektor in der 120°-Steueranordnung ist,

wenn der niedrige Schalter durch ein Signal gesteuert wird, das geeignet ist, ihn während des ersten Zeitintervalls in einem Ein-Zustand zu halten, und durch ein Signal, das geeignet ist, ihn während des zweiten Zeitintervalls in einem Aus-Zustand zu halten, oder
wenn der hohe Schalter während des ersten Zeitintervalls durch ein *PWM-Signal* und während des zweiten Zeitintervalls durch ein Signal gesteuert wird, das geeignet ist, ihn in einem Aus-Zustand zu halten,
der andere Schalter der Abzweigung beim Übergang aus dem zwischen dem Stator und dem Rotor gebildeten Winkel aus dem ersten Winkelsektor in den zweiten Winkelsektor gesteuert wird, um derart im Ein-Zustand zu sein, dass während einer Zeit, die für die magnetische Entladung der der Abzweigung zugeordneten Motorwicklung ausreicht, ein elektrischer Strom durch die der Abzweigung zugeordnete Motorwicklung und den Transistor des anderen Schalters fließt.

4. Verfahren nach Anspruch 3, **dadurch gekennzeichnet, dass** während des gesamten Zeitintervalls der magnetischen Entladung einer Motorwicklung, die einer Abzweigung zugeordnet ist, das Signal, das den Schalter steuert, der das *PWM*-Signal empfängt, durch ein Signal ersetzt wird, das geeignet ist, den Schalter in einem Ein-Zustand zu halten.

5. Verfahren nach Anspruch 4, **dadurch gekennzeichnet, dass** während des gesamten Zeitintervalls der magnetischen Entladung einer Motorwicklung, die einer Abzweigung zugeordnet ist, das Signal, das den Schalter steuert, der das $\overline{PWM}$-Signal empfängt, durch ein Signal ersetzt wird, das geeignet ist, den Schalter in einem Aus-Zustand zu halten.

6. Verfahren nach einem der Ansprüche 1 bis 5, das die folgenden Schritte umfasst:

- Bestimmung der Geschwindigkeit des Rotors im Verhältnis zum Stator;
- Berechnung durch die Controller (4) der Dauer des Zeitintervalls der magnetischen Entladung einer Motorwicklung, die einer Abzweigungen zugeordnet ist, gemäß einer affinen Relation des ermittelten Wertes der Geschwindigkeit des Rotors im Verhältnis zum Stator, wobei die affine Relation zuvor bestimmt und im Controller gespeichert wurde.

7. Verfahren nach Anspruch 6, **dadurch gekennzeichnet, dass** die affine Relation durch die Durchführung der folgenden Schritte vorherbestimmt wird:

- Schätzung der elektrischen Impedanzen des Motors (5) für verschiedene ermittelte Werte der Geschwindigkeit des Rotors im Verhältnis zum Stator;
- numerische Lösung der elektrischen Gleichungen, die den Motor (5) regeln, für verschiedene ermittelte Werte der Geschwindigkeit des Rotors im Verhältnis zum Stator;

- Schätzung der Dauer des Zeitintervalls der magnetischen Entladung einer Motorwicklung für verschiedene ermittelte Werte der Geschwindigkeit des Rotors im Verhältnis zum Stator;
- Bestimmung einer affinen Relation der geschätzten Dauer des Zeitintervalls für die magnetische Entladung einer Motorwicklung in Abhängigkeit von dem ermittelten Wert der Geschwindigkeit des Rotors im Verhältnis zum Stator;
- Speicherung der Parameter der affinen Relation im Controller.

8. Controller (4) eines Dreiphasen-Umrichters (3) gemäß einer 120°-Steuerungsanordnung, die einer Steuerung vom Typ *PWM* ohne aktive Synchrongleichrichtung zugeordnet ist, der ausgelegt ist, um einen Synchronmotor (5) mit Permanentmagnet einer Onboard-Ausrüstung eines Luftfahrzeugs elektrisch zu versorgen, wobei der Motor einen Stator und einen Rotor umfasst, der geeignet ist, relativ zum Stator drehend angetrieben zu werden, wenn der Motor (5) elektrisch versorgt wird, wobei der Umrichter (3) drei Abzweigungen (31, 32, 33) umfasst, die jeweils zwei Schalter (310, 311 , 320, 321 und 330, 331) aufweisen, die einer Motorwicklung gemäß einer 120°-Steuerungsanordnung eines Dreiphasen-Umrichters zugeordnet sind, wobei jeder Schalter einen Transistor und eine Diode umfasst, die antiparallel angeordnet ist, wobei der Controller (4) geeignet ist, um:

- ein erstes digitales Signal mit zwei Spannungsniveaus zu erzeugen, das geeignet ist, einen ersten Schalter einer Abzweigung entweder in einen Ein-Zustand oder alternativ aus einem Aus-Zustand in einen Ein-Zustand gekippt gemäß einem *PWM*-Signal während eines ersten Zeitintervalls zu schalten, in dem der zwischen dem Stator und dem Rotor gebildete Winkel in einem ersten Winkelsektor der 120°-Steuerungsanordnung ist, und während eines zweiten Zeitintervalls in einen Aus-Zustand, in dem der zwischen dem Stator und dem Rotor gebildete Winkel in einem zweiten Winkelsektor nach dem ersten Winkelsektor in der 120°-Steueranordnung ist,
- ein zweites digitales Signal mit einem Spannungsniveau zu erzeugen, das geeignet ist, beim Übergang des zwischen dem Stator und dem Rotor gebildeten Winkels aus ersten Winkelsektor in den zweiten Winkelsektor den Ein-Zustand des zweiten Schalters der Abzweigung derart zu steuern, dass ein elektrischer Strom durch die der Abzweigung zugeordnete Motorwicklung und den Transistor des zweiten Schalters während einer Zeit fließt, die für die magnetische Entladung der Motorwicklung ausreicht, die der Abzweigung zugeordnet ist.

9. Controller (4) eines Umrichters (3) nach Anspruch 8, **dadurch gekennzeichnet**, dasser geeignet ist, ein von dem Schalter während des gesamten Zeitintervalls der magnetischen Entladung einer Motorwicklung, die einer Abzweigung zugeordnet ist, empfangenes digitales *PWM*-Signal durch ein Signal zu ersetzen, das geeignet ist, den Schalter während des gesamten Zeitintervalls in einem Ein-Zustand zu halten.

10. Controller (4) eines Dreiphasen-Umrichters (3) gemäß einer 120°-Steuerungsanordnung, die einer Steuerung vom Typ *PWM* mit aktiver Synchrongleichrichtung zugeordnet ist, der ausgelegt ist, um einen Synchronmotor (5) mit Permanentmagnet eines Lüfters an Bord eines Luftfahrzeugs elektrisch zu versorgen, wobei der Motor einen Stator und einen Rotor umfasst, der geeignet ist, relativ zum Stator drehend angetrieben zu werden, wenn der Motor (5) elektrisch versorgt wird, wobei der Umrichter (3) drei Abzweigungen (31, 32, 33) umfasst, die jeweils zwei Schalter (310, 311 , 320, 321 und 330, 331) aufweisen, die einer Motorwicklung gemäß einer 120°-Steuerungsanordnung eines Dreiphasen-Umrichters zugeordnet sind, wobei jeder Schalter einen Transistor und eine Diode umfasst, die antiparallel angeordnet ist, wobei ein hoher Schalter von den zwei Schaltern der Abzweigung zwischen einem etwa konstanten positiven Potential und der Motorwicklung angeordnet ist, wobei ein niedriger Schalter von den zwei Schaltern der Abzweigung zwischen der Motorwicklung und einem etwa konstanten negativen Potential angeordnet ist, wobei der Controller (4) geeignet ist, um:

- ein erstes digitales Signal mit zwei Spannungsniveaus zu erzeugen, das geeignet ist, in einer Abzweigung während eines ersten Zeitintervalls, in dem der zwischen dem Stator und dem Rotor gebildete Winkel in einem ersten Winkelsektor der 120°-Steuerungsanordnung ist, und eines zweiten Zeitintervalls, in dem der zwischen dem Stator und dem Rotor gebildete Winkel in einem zweiten Winkelsektor nach dem ersten Winkelsektor in der 120°-Steueranordnung ist, zu steuern

einen ersten niedrigen Schalter in einen Ein-Zustand während des ersten Zeitintervalls, und in einen Aus-Zustand während des zweiten Zeitintervalls, oder
einen ersten hohen Schalter, der alternativ während des ersten Zeitintervalls aus einem Aus-Zustand in einen Ein-Zustand gemäß einem *PWM*-Signal und in einen Aus-Zustand während des zweiten Zeitintervalls gekippt wird,

- ein zweites digitales Signal mit einem Spannungsniveau zu erzeugen, das geeignet ist, beim Übergang des zwischen dem Stator und dem Rotor gebildeten Winkels aus ersten Winkelsektor in den zweiten Winkelsektor den Ein-Zustand des zweiten Schalters der Abzweigung derart zu steuern, dass ein elektrischer Strom durch die der Abzweigung zugeordnete Motorwicklung und den Transistor des zweiten Schalters während einer Zeit fließt, die für die magnetische Entladung der Motorwicklung ausreicht, die der Abzweigung zugeordnet ist.

11. Controller (4) eines Umrichters (3) nach Anspruch 10, **dadurch gekennzeichnet, dass** er geeignet ist, ein digitales *PWM*-Signal, das von dem Schalter während des gesamten Zeitintervalls der magnetischen Entladung einer Motorwicklung, die einer Abzweigung zugeordnet ist, empfangen wird, durch ein Signal zu ersetzen, das geeignet ist, den Schalter während des gesamten Intervalls in einem Ein-Zustand zu halten.

12. Controller (4) eines Umrichters (3) nach Anspruch 11, **dadurch gekennzeichnet, dass** er geeignet ist, ein digitales $\overline{PWM}$-Signal, das von dem Schalter während des gesamten Zeitintervalls der magnetischen Entladung einer Motorwicklung, die einer Abzweigung zugeordnet ist, durch ein Signal zu ersetzen, das geeignet ist, den Schalter während des gesamten Intervalls in einem Aus-Zustand zu halten.

13. Controller (4) eines Umrichters (3) nach einem der Ansprüche 8 bis 12, **dadurch gekennzeichnet, dass** er einen Eingang einer Kommunikationsleitung (61) zu einem Sensor (60) umfasst, der geeignet ist, eine Position oder eine Geschwindigkeit des Rotors im Verhältnis zum Stator des Motors (5) zu messen, ein Medium, das geeignet ist, einen bestimmten Wert einer Geschwindigkeit und eine vorbestimmte affine Relation der Dauer des Zeitintervalls der magnetischen Entladung einer Motorwicklung, die einer Abzweigung zugeordnet ist, in Abhängigkeit von dem bestimmten Wert der Motorgeschwindigkeit zu speichern; und Mittel, um in Abhängigkeit von dem bestimmten Wert der Motorgeschwindigkeit eine Dauer des Zeitintervalls der magnetischen Entladung einer Motorwicklung, die einer Abzweigung zugeordnet ist, zu berechnen.

14. System (7) zur Stromversorgung eines Motors (5), wobei der Motor (5) einen Stator und einen Rotor umfasst, der im Verhältnis zum Stator drehbar montiert ist, wobei das Versorgungssystem (7) umfasst:

- einen Umrichter (3) mit einer Vielzahl von Schaltern (310, 311, 320, 321 und 330, 331), die zur Regulierung der Stromversorgung des Motors gesteuert werden,
- einen Controller (4) des Umrichters (3), und
- einen Sensor (60), der dazu geeignet ist, eine Position oder eine Geschwindigkeit des Rotors relativ zum Stator zu messen,

wobei der Controller (4) ein Controller nach einem der Ansprüche 8 bis 13 ist.

## Claims

1. A method for controlling a three-phase inverter (3) according to a 120° control arrangement associated with a PWM type control without active synchronous rectification, the inverter (3) being driven by a controller (4) and configured to electrically supply a permanent magnet synchronous motor (5) of an on-board equipment in an aircraft, said motor (5) comprising a stator and a rotor configured to be rotated relative to the stator when the motor (5) is electrically supplied, the inverter (3) comprising three branches (31, 32, 33), each having two switches (310, 311, 320, 321 and 330, 331) associated with a motor winding in a 120° control arrangement of a three-phase inverter, each switch comprising a transistor and a diode arranged in antiparallel, **characterized in that** when a switch of a branch is controlled

- during a first time interval when the angle formed between the stator and rotor is within a first angular sector of the control arrangement at 120° by a signal configured to maintain the switch in an ON state or by a PWM signal and,
- during a second time interval when the angle formed between the stator and rotor is in a second angular sector following the first angular sector in the 120° control arrangement by a signal configured to maintain the switch in a OFF state,

the other switch of said branch is controlled on passage of the angle formed between the stator and rotor from the first angular sector to the second angular sector to be in the ON state so as to pass an electric current through the motor winding associated with said branch and the transistor of the other switch for a time sufficient for magnetic discharge of the motor winding associated with said branch.

2. Method according to claim 1, **characterized in that**, throughout the time interval of magnetic discharge of a motor winding associated with a branch, the signal which drives the switch which receives the PWM signal is replaced by a signal configured to maintain said switch in an ON state.

3. Method for controlling a three-phase inverter (3) according to a 120° control arrangement associated with a PWM type control with active synchronous rectification, the inverter (3) being driven by a controller (4) and configured to electrically supply a permanent magnet synchronous motor (5) of a fan on-board an aircraft, said motor comprising a stator and a rotor configured to be rotated relative to the stator when the motor is electrically powered, the inverter (3) comprising three branches (31, 32, 33), each comprising two switches (310, 311, 320, 321 and 330, 331) associated with a motor winding according to a 120° control arrangement of a three-phase inverter, each switch comprising a transistor and a diode arranged in antiparallel, a high switch of the two switches of each branch being arranged between a substantially constant positive potential and the motor winding, a low switch of the two switches of each branch being arranged between the motor winding and a substantially constant negative potential

 **characterized in that** in one branch during a first time interval where the angle formed between the stator and the rotor is within a first angular sector of the 120° control arrangement and a second time interval where the angle formed between the stator and the rotor is within a second angular sector following the first angular sector in the 120° control arrangement,
 when the low switch is controlled by a signal configured to maintain it in a ON state during the first time interval, and by a signal configured to maintain it in a OFF state during the second time interval, or
 when the upper switch is controlled by a PWM signal during the first time interval and by a signal configured to maintain it in a OFF state during the second time interval, the other switch of said branch is controlled on passage of the angle formed between the stator and rotor from the first angular sector to the second angular sector to be in the ON state so as to pass an electric current through the motor winding associated with said branch and the transistor of the other switch for a time sufficient for magnetic discharge of the motor winding associated with said branch.

4. Method according to claim 3, **characterized in that**, throughout the time interval of magnetic discharge of a motor winding associated with a branch, the signal which drives the switch which receives the PWM signal is replaced by a signal configured to maintain said switch in a ON state.

5. Method according to claim 4, **characterized in that** throughout the magnetic discharge time interval of a motor winding associated with a branch, the signal which drives the switch which receives the signal $\overline{PWM}$ is replaced by a signal configured to maintain said switch in a OFF state.

6. Method according to one of claims 1 to 5 which comprises the following steps:

 Determination of the rotor speed relative to the stator ;
 Calculation by the controller (4) of the duration of the magnetic discharge time interval of a motor winding associated with a branch according to an affine relationship of the determined value of the rotor speed relative to the stator, said affine relationship being previously determined and stored in the controller.

7. Method according to claim 6, **characterized in that** the affine relationship is predetermined by carrying out the following steps:

 Estimation of the electrical impedances of the motor (5) for various determined values of the speed of the rotor relative to the stator;
 Numerical resolution of the electrical equations governing the motor (5) for different determined values of the rotor speed relative to the stator;
 Estimation of the duration of the magnetic discharge time interval of a motor winding for different values of the rotor speed in relation to the stator;
 Determination of an affine relationship of the estimated duration of the magnetic discharge time interval of a motor winding as a function of the determined value of the rotor speed relative to the stator;
 Storage of the affine relationship parameters in the controller.

8. Controller (4) of a three-phase inverter (3) according to a 120° control arrangement associated with a PWM type control without active synchronous rectification, configured to electrically power a permanent magnet synchronous motor (5) of an on-board equipment in an aircraft, said motor comprising a stator and a rotor configured to be rotated relative to the stator when the motor (5) is electrically powered, the inverter (3) comprising three branches (31, 32, 33), each including two switches (310, 311, 320, 321 and 330, 331) associated with a motor winding according to a 120° control arrangement of a three-phase inverter, each switch comprising a transistor and a diode arranged in antiparallel, said controller (4) being configured to:

generate a first digital signal having two voltage levels suitable for controlling a first switch of a branch either in a conducting state or alternately switched from a OFF state to a ON state according to a PWM signal during a first time interval where the angle formed between the stator and the rotor is in a first angular sector of the 120° control arrangement and, in a OFF state during a second time interval where the angle formed between the stator and the rotor is in a second angular sector following the first angular sector in the 120° control arrangement. generate a second digital signal with a voltage level suitable for controlling the ON state of the second switch of said branch when the angle formed between the stator and the rotor changes from the first angular sector to the second angular sector, so as to cause an electric current to flow through the motor winding associated with said branch and the transistor of the second switch for a time sufficient to magnetically discharge the motor winding associated with said branch.

9. Controller (4) of an inverter (3) according to claim 8, **characterized in that** it is configured to replace a digital PWM signal received by the switch throughout the time interval of magnetic discharge of a motor winding associated with a branch, by a signal configured to maintain said switch in an ON state throughout said interval.

10. Controller (4) of a three-phase inverter (3) according to a 120° control arrangement associated with a PWM type control with active synchronous rectification, configured to electrically supply a permanent magnet synchronous motor (5) of a fan on board an aircraft, said motor comprising a stator and a rotor configured to be rotated relative to the stator when the motor (5) is electrically supplied, the inverter (3) comprising three branches (31, 32, 33), each comprising two switches (310, 311, 320, 321 and 330, 331) associated with a motor winding in a 120° control arrangement of a three-phase inverter, each switch comprising a transistor and a diode arranged in antiparallel, a high switch of the two switches of the branch being arranged between a substantially constant positive potential and the motor winding, a low switch of the two switches of the branch being arranged between the motor winding and a substantially constant negative potential,

said controller (4) being configured to:
generate a first digital signal presenting two voltage levels suitable for controlling
in a branch during a first time interval where the angle formed between the stator and the rotor is in a first angular sector of the 120° control arrangement and a second time interval where the angle formed between the stator and the rotor is in a second angular sector following the first angular sector in the 120° control arrangement, a first low switch in a ON state during the first time interval, and in a OFF state during the second time interval, or a first high switch alternately switched from a OFF state to a ON state according to a PWM signal during the first time interval, and into a OFF state during the second time interval,

generate a second digital signal with a voltage level suitable for controlling, when the angle formed between the stator and the rotor changes from the first angular sector to the second angular sector, the ON state of the second switch of said branch so as to cause an electric current to flow through the motor winding associated with said branch and the transistor of the second switch for a time sufficient to magnetically discharge the motor winding associated with said branch.

11. Controller (4) of an inverter (3) according to claim 10, **characterized in that** it is configured to replace a digital PWM signal received by the switch throughout the time interval of magnetic discharge of a motor winding associated with a branch, by a signal configured to maintain said switch in an ON state throughout said interval.

12. Controller (4) of an inverter (3) according to claim 11, **characterized in that** it is configured to replace a digital signal $\overline{PWM}$ received by the switch throughout the magnetic discharge time interval of a motor winding associated with a branch, by a signal configured to maintain said switch in a OFF state throughout said interval.

13. A controller (4) of an inverter (3) according to one of claims 8 to 12, **characterized in that** it comprises an input of a line (61) of communication to a sensor (60) configured to measure a position or a speed of the rotor with respect to the stator of the motor (5), a medium configured to keep in memory a determined value of a speed and a predetermined affine relation of the duration of the magnetic discharge time interval of a motor winding associated with a branch as a function of the determined value of the speed of the motor; and means for calculating, as a function of the determined value of motor speed, a duration of the magnetic discharge time interval of a motor winding associated with a branch.

14. Power supply system (7) for a motor (5), said motor (5) comprising a stator and a rotor rotatably mounted with respect to the stator, the power supply system (7) comprising:

an inverter (3) comprising a plurality of controlled switches (310, 311, 320, 321 and 330, 331) for regulating the power supply to the motor,
a controller (4) of the inverter (3), and
a sensor (60) configured to measure a position or speed of the rotor relative to the stator,

said controller (4) being a controller according to one of claims 8 to 13.

FIG. 1

FIG. 2

EP 3 766 169 B1

FIG. 3

EP 3 766 169 B1

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2605400 A1
- US 20100127652 A1
- EP 3493393 A1